# EUROPEAN PATENT SPECIFICATION

(11) **EP 1 193 170 B1**
(45) Date of publication and mention of the grant of the patent: **29.06.2005**
(21) Application number: 01122036.5
(22) Date of filing: 13.09.2001
(51) Int. Cl.: B62K 15/00

(54) **Electric motor assisted bicycle**
Fahrrad mit elektrischem Hilfsantrieb
Bicyclette avec moteur électrique

(30) Priority: 26.09.2000 JP 2000292424
(43) Date of publication of application: 03.04.2002
(73) Proprietor: Honda Giken Kogyo Kabushiki Kaisha, Minato-ku, Tokyo (JP)
(72) Inventor: Nakagomi, Yoshio, Wako-shi, Saitama (JP); Maruyama, Tomoyuki, Wako-shi, Saitama (JP); Nagura, Hidenori, Wako-shi, Saitama (JP)
(74) Representative: Liska, Horst, Dr.-Ing.

(56) References cited:
- DE-A- 2 106 584
- DE-A- 3 418 930
- FR-E- 84 291
- GB-A- 1 013 172
- US-A- 4 441 729

## Description

The present invention relates to an arrangement for transporting an electric motor assisted bicycle in a four-wheel motor vehicle.

Documents DE-A-34 18 930 and DE-A-2 106 584 disclose an electric motor assisted bicycle having a construction such that an electric motor assist unit comprising a human force driving system for transmitting a tread force exerted on pedals and a motor driving system for adding auxiliary power to said human force driving system according to said tread force is supported by a vehicle body frame, a steering handle and a front wheel are supported by one end of said vehicle body frame, and a rear wheel is supported by the other end, wherein said electric motor assisted bicycle can be disassembled so as to be transported in a four-wheel motor vehicle.

There is known an electric motor assisted bicycle comprising a human force driving system for transmitting a tread force exerted on pedals to a rear wheel and a motor driving system capable of adding auxiliary power to the human force driving system according to the tread force. As to such an electric motor assisted bicycle, a variety of contrivances have been proposed with respect to the structure of the vehicle body frame. For example, Japanese Pre-examination Patent Publication (KOKAI) No. Hei 11-105758 (1999) discloses an electric motor assisted bicycle which can be folded up and in which a battery can be put into and out of a hollow portion of the vehicle body frame through an opening portion of the vehicle body frame exposed by the folding up.

In recent years, the use of the electric motor assisted bicycle has been widened, and there is a mode of use in which an electric motor assisted bicycle is transported by a private vehicle to a resort, a shopping center or the like and is used there. In such a case, it is desirable that the electric motor assisted bicycle can be converted into an easily transportable form, such as folded-up form. In addition, it is requested that at the destination of transport the folded electric motor assisted bicycle can be easily converted back to its original form.

Therefore, not only easiness of folding, separation and re-assembling to the original form is demanded, but also it is demanded that the separated component parts be small and lightweight so that they can be contained by effectively using the limited space in the private vehicle.

In the electric motor assisted bicycle disclosed in the above-mentioned publication, the vehicle body frame can be folded up and can be loaded in the folded condition onto a load-carrying carrier of a private car; however, the space of the load-carrying carrier is reduced, and loading and unloading of the bicycle with its whole weight is a hard work.

It is an object of the present invention to solve the above-mentioned problems in the prior art and to provide an improved arrangement for transporting an electric motor assisted bicycle in a four-wheel motor vehicle.

This object is achieved by an arrangement according to claim 1.

The electric motor assisted bicycle can be disassembled to be capable of being contained in a tray roughly horizontally drawable into and out of a four-wheel motor vehicle. In addition, a vehicle body frame can be bisected into a front frame side and a rear frame side, and an assist system comprising an electric motor assist unit and a battery box is concentratedly arranged on the rear frame side.

Besides, a handle can be folded up to be along a side surface of a front wheel, and pedals can be folded up to be along side surfaces of the rear frame. Further, when contained in a laid-down condition in the tray, the bisected front frame and rear frame partly lap over each other, the front frame and the rear frame at the lapping portion are staggered from each other in the drawing direction of the tray, and a saddle and a seat post can be disassembled so as to be laid out separately from the rear frame.

The electric motor assisted bicycle can be disassembled and loaded onto a tray in a motor vehicle, the bicycle can be loaded while securing the space of a load-carrying carrier, and it is easy to load and unload the disassembled bicycle. The electric motor assisted bicycle can be disassembled while a power transmission mechanism from the assist system to the rear wheel is maintained in the condition for use.

The size in the width direction of the electric motor assisted bicycle can be reduced, so that the height of the disassembled bicycle laid down on the tray can be reduced. Further, the bicycle is disassembled so that the front frame and the rear frame are laid out to be staggered from each other in the drawing direction of the tray and can partly lap over each other. Therefore, the size in the width direction of the tray can be reduced, so that the electric motor assisted bicycle can be easily contained in the tray even where, for example, the tray is set to be drawn into and out of the motor vehicle in the front-rear direction and it is impossible to take a large size in the width direction of the motor vehicle.

Now, an embodiment of the present invention will be described referring to the drawings, in which:
Figure 1 is a side view of an electric motor assisted bicycle according to one embodiment of the present invention;
Figure 2 is a perspective view of a rear frame as viewed from the left front side;
Figure 3 is a plan view of the rear frame;
Figure 4 is a side view of a major part around an assist unit;
Figure 5 is a plan view of a tray containing the electric motor assisted bicycle;
Figure 6 is a perspective view of the tray containing the electric motor assisted bicycle;
Figure 7 is a perspective view of a rear portion of a four-wheel motor vehicle provided with the tray;
Figure 8 is a sectional view of the rear portion of the four-wheel motor vehicle provided with the tray;
Figure 9 is a sectional perspective view showing the structure of a battery;
Figure 10 is a perspective view of a battery box;
Figure 11 is a sectional side view of the battery box;
Figure 12 is a sectional view taken along line A-A of Figure 11;
Figure 13 is a sectional plan view of an end block provided in a front frame;
Figure 14 is a front view of the end block provided in the front frame;
Figure 15 is a sectional front view pertaining to a modified example of the end block;
Figure 16 is a front view pertaining to the modified example of the end block;
Figure 17 is a sectional front view of a joint of a handle post;
Figure 18 is a perspective view of a major part of the joint of the handle post;
Figure 19 shows perspective views of the joint of the handle post;
Figure 20 is a sectional front view of a major part of a pedal;
Figure 21 is a plan view of a clamper for the seat post;
Figure 22 is a front view of the clamper for the seat post.

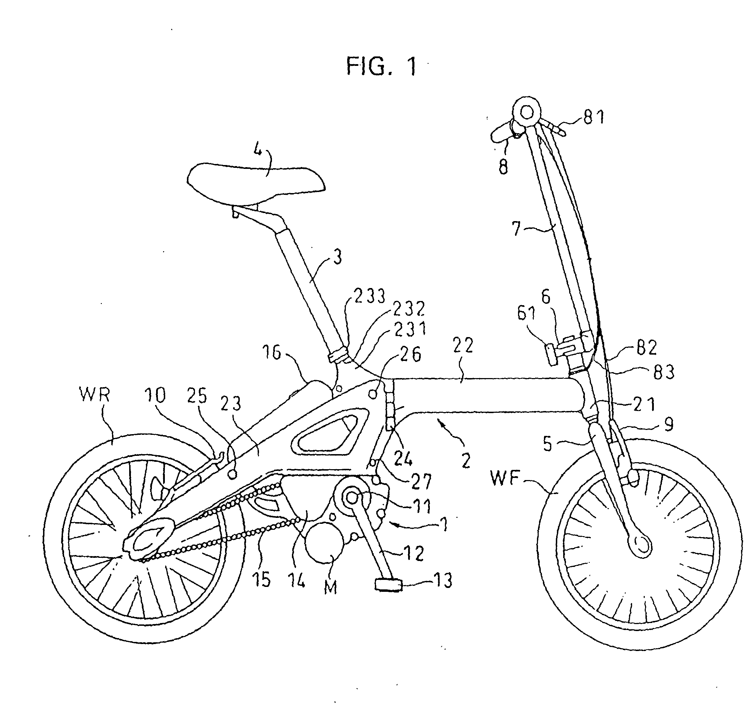

Figure 1 is a side view of an electric motor assisted bicycle according to one embodiment of the present invention. A vehicle body frame 2 of the electric motor assisted bicycle comprises a head pipe 21 located at a front side of the vehicle body, a front frame 22 extended roughly horizontally rearwards from the head pipe 21, and a rear frame 23 connected to the rear end of the front frame 22. The rear frame 23 is a split frame consisting of a left-right pair of die-cast aluminum products. The split frame has a forked structure having a connection portion 231 on the front side of the vehicle body, and the connection portion 231 is provided with a boss 232 extended to a slantly rear upward side for holding a seat post 3.

The boss 232 is provided with a fastening allowance, and the seat post 3 is securely held by the boss 232 by fastening with a clamper 233. The structure of the clamper 233 will be described later. With the clamper 233 loosened, the seat post 3 can be slid up and down with respect to the boss 233, so that the height of a seat 4 disposed at the top end of the seat post 3 can be adjusted. In addition, the seat post 3 can be drawn out of the boss 233 to be completely separated therefrom. Further, the connection structure of the seat post 3 and the boss 232 is adopted also for the connection between the seat 4 and the seat post 3, so that the seat 4 and the seat post 3 can be easily connected to and separated from each other.

A front fork 5 is turnably held by the head pipe 21. A handle post 7 is connected to the top end of a shaft provided at an upper portion of the front fork 5 through a joint 6, and a steering handle 8 is connected to an upper portion of the handle post 7. The joint 6 can be loosened by operating a knob 61, and by this operation, the handle post 7 can be folded up with the joint 6 as a center. The mode of this folding up will be described later. A front wheel WF is rotatably shaft-supported at the lower end of the front fork 5. The tip end of a wire 82 extended downward from a brake lever 81 at the steering handle 8 is connected to a front brake 9 provided at the front wheel WF.

The rear frame 23 is connected to the front frame 22 through a hinge 24 and a lock device provided on the opposite side of the hinge 24, namely, on the left side of the vehicle body. By unlocking the lock device, the vehicle body can be folded up with the hinge 24 as a pivot, and, further, by releasing the connection of the hinge 24, the front frame 22 and the rear frame 23 can be separated from each other. Details of the lock device and the hinge 24 will be described later.

In side view, the rear frame 23 appears wider on the front side of the vehicle body and the width is gradually reduced toward the rear side. A rear wheel WR as a driving wheel is shaft-supported between rear ends of the left-right pair of the rear frames 23. The rear frame 23 is provided with a rear brake 10, and a wire 83 is extended from the steering handle 8 and connected to the rear brake 10.

An electric motor assist unit (assist unit) 1 disposed on the rear side of an extension line of the seat post 3 is suspended at a lower portion of a wider portion, namely, on the front side of the rear frame 23. The electric motor assist unit 1 is fixed by co-fastening at the time of assembly of the rear frame 23 by a bolt 27 and a bolt 25 for fastening the left and right split portions of the rear frame 23. The electric motor assist unit 1 comprises an electric motor M for assisting the tread force disposed at the lowest portion thereof, and a crankshaft 11 disposed on the upper front side of the motor M. Cranks 12 are fixed to the left and right ends of the crankshaft 11, and pedals 13 are provided at the tip ends of the cranks 12. The pedals 13 are used in the condition of being extended horizontally in left and right directions of the vehicle body; by adopting a hinge at the connecting portion of the pedal 13 and the crank 12, the pedals 13 can be constituted to be foldable to come along the cranks 12 when not used.

The tread force inputted from the pedals 13 and an assisting force generated by the motor M to relieve the tread force according to the tread force are combined through a transmission device including gears in the electric motor assist unit 1, and the resultant output is taken out as rotation of a driving sprocket (not shown) covered with a sprocket cover 14. A chain 15 is provided for transmitting the rotation of the driving sprocket to the rear wheel WR. Incidentally, the diameters of the front wheel WF and the rear wheel WR are both 16 inches.

A battery box 16 containing a battery as a power source for the electric motor M and other electrical equipments is fitted in a space surrounded by the wide portion and the connected portion 231 of the rear frame 23 and the bolt 25 (or a boss supporting the bolt) for connecting the left-right pair of the rear frames 23. In addition to the bolts 25 and 27, a bolt 26 disposed in the vicinity of the connecting portion of the front frame 22 and the rear frame 23 is used for connecting the left and right split rear frames 23.

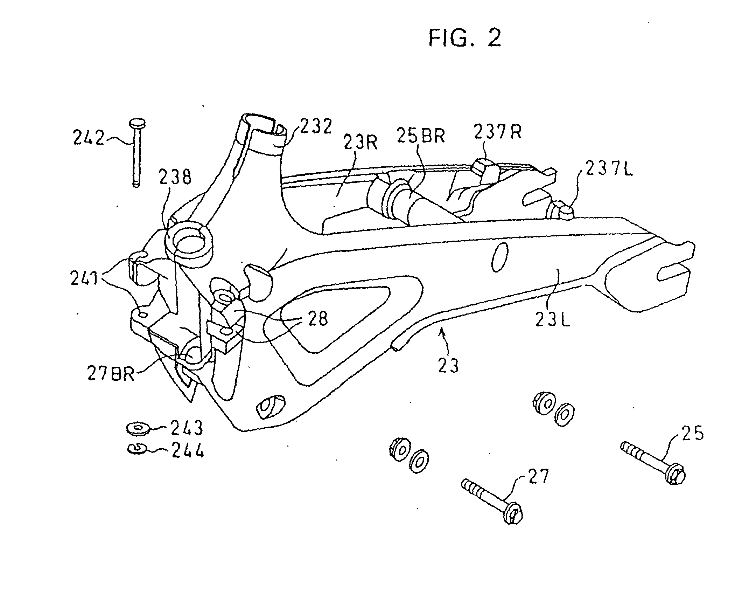

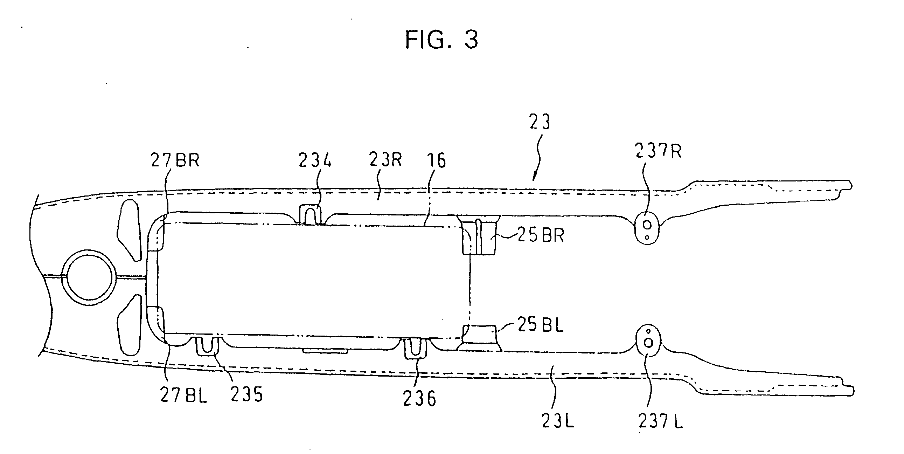

Figure 2 is a perspective view of the rear frame 23 as viewed from the left front side of the vehicle body, and Figure 3 is a plan view of the same. In the figures, the rear frame 23 consists of a left portion 23L and a right portion 23R, and is provided with bosses 25BL, 25BR, 27BL, 27BR through which the bolts 25, 27 can be inserted. Bosses for the bolt 26 are also provided, but not shown in Figures 2 and 3. A hanger portion (described later) formed at the top end of the electric motor assist unit 1 is clampedly fitted between the bosses 25BL, 25BR and between the bosses 27BL, 27BR.

An upper surface of the rear frame 23 is provided with seats 234, 235, 236 for fitting the battery box 16, and seats 237L, 237R for fitting the rear brake 10. A fitting seat 238 for fitting a power source switch for supplying electric current from the battery to the electric motor assist unit 1 and the like is provided on the upper surface of the rear frame 23 at a front portion of a boss 232 for the seat post.

Further, a boss 241 as one portion of the hinge 24 and a boss 28 for rotatably supporting a pin (not shown) of the lock device are provided at the front end of the rear frame 23, namely, a mating surface for mating with the front frame 22. A pivot pin 242 is inserted into the boss 241, and a washer 243 and a stop ring 244 are fitted to the tip end thereof. A hook (described later) on the side of the front frame 22 constituting a portion of the hinge is engaged with the pin 242.

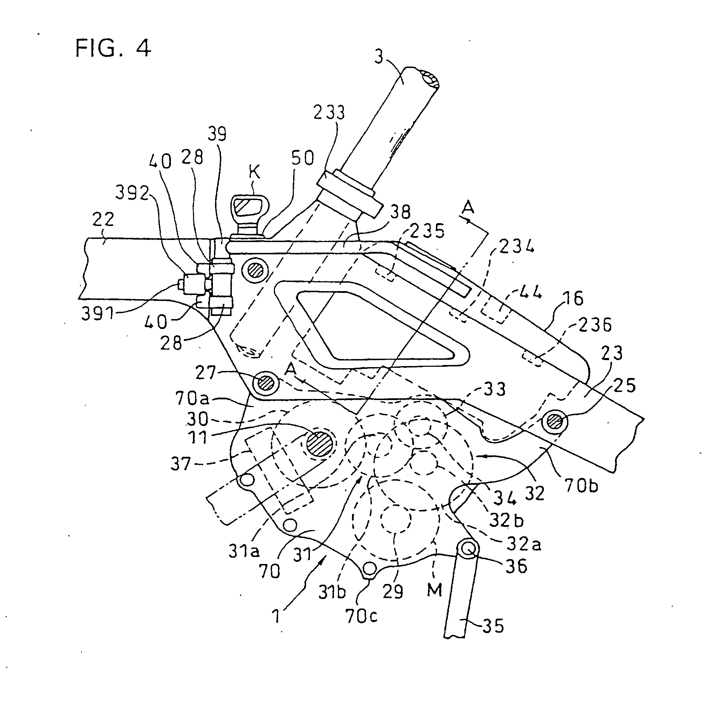

Figure 4 is a side view of a major part showing the fitting position relationships of the rear frame 23 and the battery box 16 and the electric motor assist unit 1. In Figure 4, hangers 70a, 70b for connecting the electric motor assist unit 1 to the rear frame 23 are provided in the periphery of a case main body 70 of the electric motor assist unit 1, and, by fastening the hangers 70a, 70b to the rear frame 23 by the bolts 25, 27, the electric motor assist unit 1 is suspended from the rear frame 23. The case main body 70 of the electric motor assist unit 1 is desirably constituted of a molded resin article, for lightness in weight.

A tread force input gear 30 is connected to the crankshaft 11 through a one-way clutch not shown, and the tread force input gear 30 is meshed with a small gear 31a of a combination gear 31. On the other hand, a large gear 32a of an auxiliary power gear (assist gear) 32 is meshed with a pinion 29 of the motor M, and a small gear 32b rotated as one body with the large gear 32a is meshed with a large gear 31b of the combination gear 31. In addition, the large gear 31b of the combination gear 31 is meshed with an output gear 34 fixed to a shaft of the driving sprocket 33. The assist gear 32 is desirably constituted of a molded resin article for lightness in weight, and is desirably a helical gear from the viewpoint of calmness and the like.

Thus, the rotation of the motor M is transmitted to the combination gear 31 through the pinion 29 and the assist gear 32, and the tread forces inputted from the crankshaft 11 are transmitted to the combination gear 31 through the tread force input gear. The tread forces and the auxiliary power are combined with each other by the combination gear 31, and the resultant force is transmitted to the driving sprocket 33. A controller 37 disposed at a front portion in the case 70 controls the rotation of the motor M based on the tread force value inputted from a tread force detecting means not shown.

A support shaft 36 for rotatably supporting a main stand 35 constituted of a cast aluminum article is fitted to a lower portion on the rear side of the main body case 70. A projection 70c provided at the lower end of the main body case 70 is a foot portion for self-standing of the rear portion of the bicycle including the rear frame 23 when the front frame 22 and the rear frame 23 are separated from each other; when the rear portion of the bicycle is placed on the ground, it is capable of self-standing with the projection 70c and the rear wheel WR.

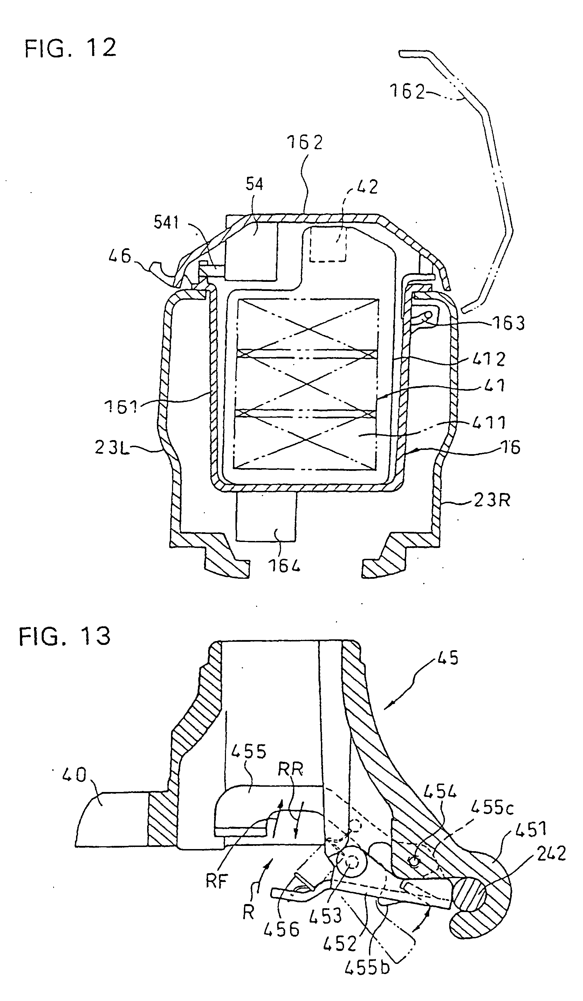

A lock pin 39 having a lock lever 38 is inserted through bosses 28, 28 provided at the front end of the rear frame 23. A bolt 391 is provided turnably with the lock pin 39 as a center, and a nut 392 is mated with the bolt 391. The bolt 391 is passed through a groove (for detailed shape, see Figures 13 to 16) of an engaging portion 40 provided in the manner of stretching from the front frame 22, and one surface of the nut 392 makes contact with the engaging portion 40 to form a fastening surface.

A central portion of the lock pin 39, namely, the portion to which the bolt 391 is fitted is eccentric with respect to the hole of the boss 28, and the strength of contact between the fastening surface of the nut 392 and the engaging portion 40 can be increased and decreased by turning the lock lever 38. The maximum of the strength of contact between the fastening surface of the nut 392 and the engaging portion 40 can be determined by the turning amount of the nut 392.

In the condition where the lock lever 38 is turned to a position along the rear frame 23, as shown in the figure, the nut 392 and the engaging portion 40 make strong contact, and the front frame 22 and the rear frame 23 are strongly connected to each other. On the other hand, when the lock lever 38 is turned in a direction away from the rear frame 23, namely, in a direction orthogonal to the vehicle body, the nut 392 is eccentrically moved in a direction away from the engaging portion 40 (to the front side of the vehicle body) due to the eccentric shape of the lock pin 39 by a distance according to the amount of eccentricity, whereby the strength of contact between the nut 392 and the engaging portion 40 is weakened. When the bolt 391 is turned with the lock pin 39 as an axis where the strength of contact is weakened, the engagement of the nut 392 and the engaging portion 40 can be released, and the front frame 22 and the rear frame 23 can be folded up with the hinge 24 as a center.

A power source switch 50 operated by a key K is fitted to the fitting seat 238 (Figure 2) provided at a front portion of the rear frame 23, namely, on the front side of the boss 232 for holding the seat post.

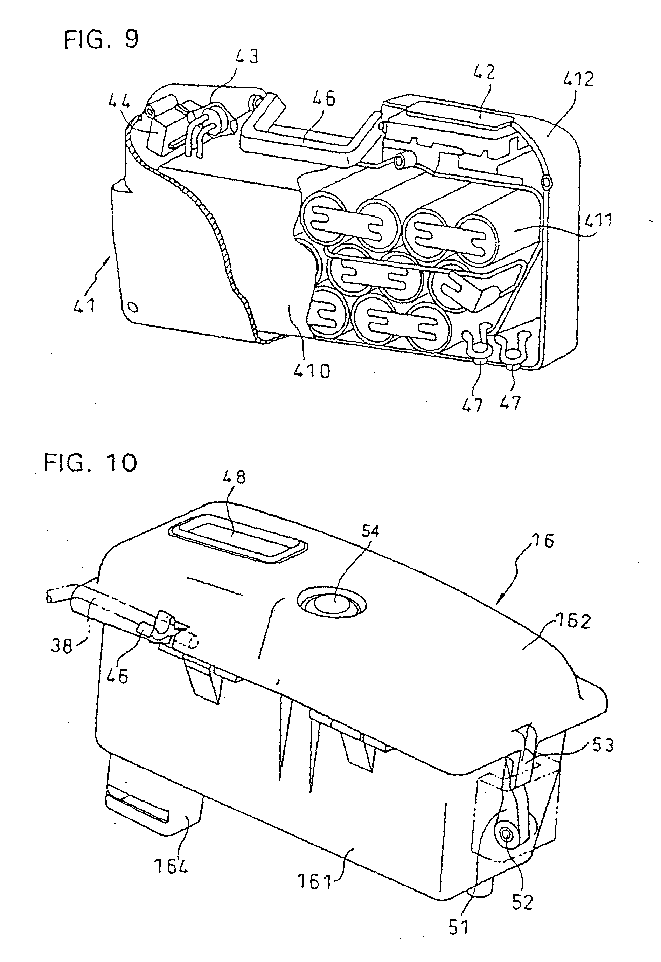

Figure 9 is a major part broken perspective view showing the structure of the battery. In the figure, the battery 41 comprises a battery main body (for example, 20 nickel-hydrogen cells are stacked like a stack of straw bags) 411 wrapped by a shrink film package 410, and a bisected molded resin case 412 for containing the battery main body 411. The case 412 is provided with an indicator 42 for turning ON a plurality of LEDs to indicate the residual power amount of the battery by the number of LEDs turned ON, a connector 43 for charging, and a fuse 44. A handle 46 for carrying and for fitting and detachment of the battery box 16 is turnably fitted to the case 412. Terminals 47, 47 to be connected to the battery main body 411 are provided at a bottom portion of the case 412.

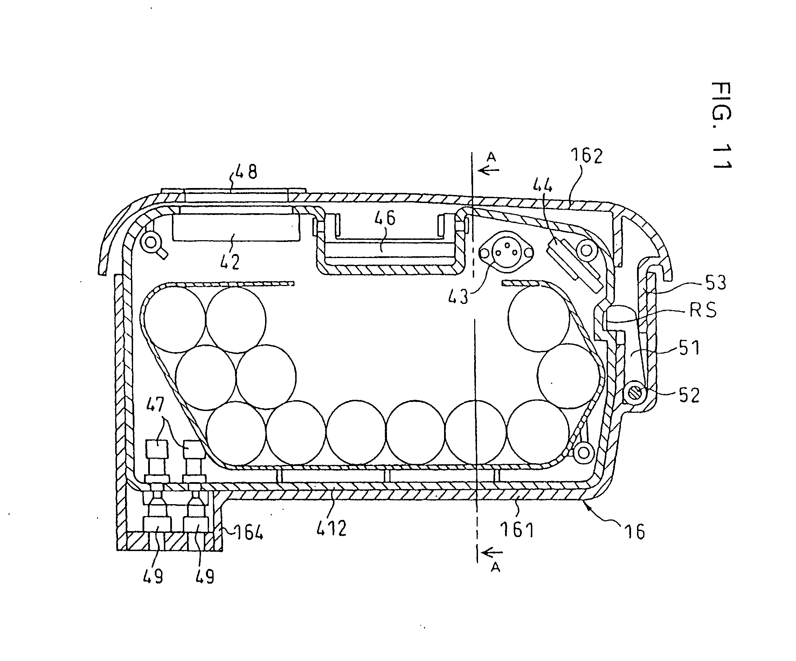

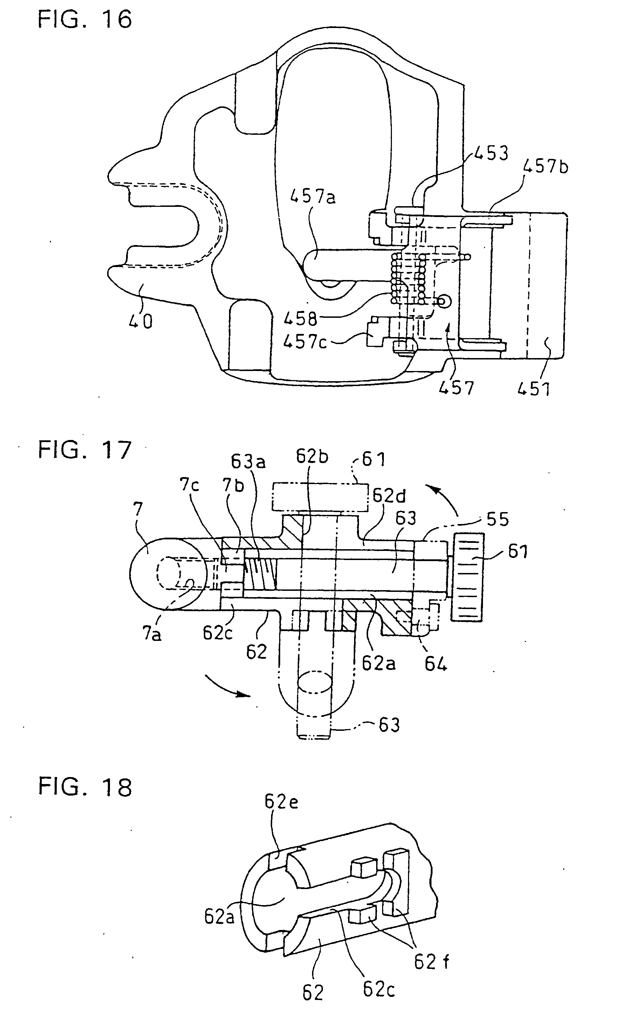

Figure 10 is a perspective view showing the appearance of the battery box 16, Figure 11 is a sectional side view, and Figure 12 is a view taken along arrow A-A of Figure 11. In these figures, the battery box 16 is supported by the seats 234, 235, 256, disposed so that its longitudinal direction coincides with the front-rear direction of the vehicle body, and is contained between the left portion 23L and the right portion 23R of the rear frame 23. The battery box 16 comprises a box main body 161 opened at an upper portion so that the battery 41 can be fitted and detached via the upper side, and a lid 162 covering the open upper portion. The lid 162 is turnably fitted to the box main body 161 by a hinge 163 so that it can be opened by turning to a side direction of the vehicle body. The two dotted chain line in Figure 16 shows the condition where the lid 162 is opened. Since the box main body 161 is disposed with its longitudinal direction coinciding with the front-rear direction of the vehicle body, the frontage of the open upper portion is greater as compared with the case where the box main body 161 is disposed with its longitudinal direction roughly orthogonal, so that fitting and detachment of the battery 41 is facilitated.

The lid 162 is provided with a window 48 for looking through the indicator 42, and a key device 54. The key device 54 comprises a claw 541 capable of being let in and out by turning a key (preferably in common with the key for operating the power source switch), and locking is made by engagement of the claw 541 with the top end of the box main body 161.

The battery 41 is contained in the box main body 161, and a terminal box 164 is provided at a bottom portion of the box main body 161. Terminals 49, 49 connected to the terminals 47, 47 on the side of the battery 41 are contained in the terminal box 164. The terminals 49, 49 are connected to the above-mentioned controller 37 through a cable not shown. A U-shaped member 46 is provided at an upper portion of the box main body 161 so as to project sideways from a notch formed at an edge of the lid 162. The U-shaped member 46 is used as a receiving means for holding the lock lever 38 at a position along the rear frame 23.

A lock arm 51 for holding the battery 41 in the battery box 16 is provided on the rear side of the vehicle body of the box main body 161. The lock arm 51 is supported on the box main body 161 by use of a pin 52 so that it can be inclined to front and rear directions of the vehicle body. At the portion where the lock arm 51 is provided, the box main body 161 has a double wall structure, and the lock arm 51 is contained in the double wall. The lock arm 51 extends upward from the pin 52, and its tip end fronts on the inside of the box main body 161 through an inner wall of the double wall portion. The lock arm 51 is so located and shaped that the tip end projected to the side of the battery 41 is fitted in a recessed portion RS of the case 412 of the battery 41.

A drooping piece 53 is fitted to or formed as one body with an edge of the lid 162 on the rear side of the vehicle. The drooping piece 53 is so located and shaped that it is inserted between the back (a surface on the rear side of the vehicle body) of the lock arm 51 and the outer wall of the double wall to exert a pressure on the back in the condition where the lid 162 is closed, and that a space for allowing inclination of the lock arm 51 to the direction of the outer wall is formed in the condition where the lid 162 is opened.

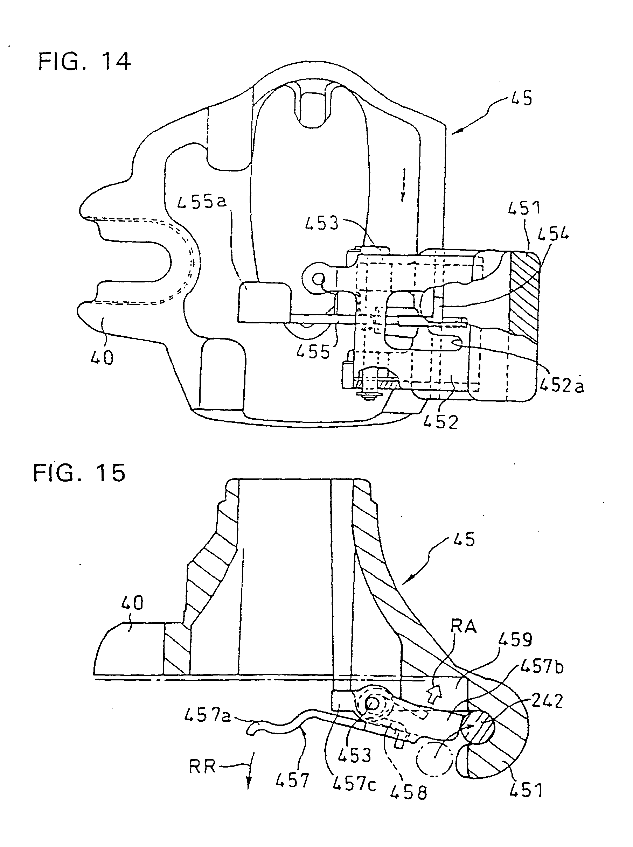

Next, the hinge 24 for connecting the front frame 22 and the rear frame 23 will be described in detail. Figure 13 is a sectional plan view of a rear end portion of the front frame 22 inclusive of the hinge 24, and Figure 14 is a front view (view as viewed from the rear side of the vehicle body) of the same. The rear end portion can be constituted of a rear end part (hereinafter referred to as "end block") integrated by welding to a pipe-like part constituting the front frame 22. In the two figures, the end block 45 is provided with a hook 451, which is so sized and located that it can be fitted between the bosses 241, 241 provided on the rear frame 23 and can be engaged with the pivot pin 242.

A lock plate 452 is so provided as to close an opening portion (notch portion) of a U-shaped hook 451. The lock plate 452 is turnably shaft-supported by a pin 453 relative to the end block 45. Further, the end block 45 is provided with an operating lever 455 turnably shaft-supported by a spring pin 454. The operating lever 455 comprises an operating portion 455a onto which a finger is to be pressed, and a hook 455b. The operating lever 455 is connected to the lock plate 452 by a tension spring 456, and the hook 455b fronts on the face side of the lock plate 452, namely, the side of the rear frame 23 through a notch window 452a formed in the lock plate 452, and is engaged with the frame of the notch window 452a. Since the hook 455b is engaged with the lock plate 452, the turning of the lock plate 452 in the direction of arrow R is restrained notwithstanding the tension spring 456 is acting. The operating lever 455 has a contact portion 455c for making contact with the end block 45 in the vicinity of the turnable shaft-support portion, and the operating lever 455 is inhibited from turning from the position shown in the figure to the direction of arrow RR.

By this constitution, the opening portion of the hook 451 is shut up by a tip end portion of the lock plate 452, so that the pivot pin 242 engaged with the hook 451 cannot escape from the hook 451. Therefore, even when the lock device operated by the lock lever 38 is unlocked, the vehicle body frame (consisting of the front frame and the rear frame) can only be folded up with the pivot pin 242 as a center.

In order to separate the front frame 22 and the rear frame 23 from each other after the vehicle body frame is folded up, the operating portion 455a of the operating lever 455 is pushed into the depth of the end block 45 (in the direction of arrow RF). Then, the operating lever 455 is turned with the pin 454 as a center, and the lock plate 452 is turned with the pin 453 as a center, whereby the opening portion of the hook 451 is opened. Therefore, the pivot pin 242 can now escape from the hook 451, and the vehicle body frame can be completely separated at the connection portion between the front frame 22 and the rear frame 23.

As a result of turning of the operating lever 455 and the lock plate 452, the engagement between the hook 455b of the operating lever 455 and the lock plate 452 is released, and the opened condition of the opening portion is maintained even after the pressing on the operating lever 455 is stopped. Therefore, the operation of pressing the operating lever 455 and the work of separating the vehicle body frame can be easily carried out stepwise by using both hands.

In the case of re-assembling the separated vehicle body frame, the pivot pin 242 is made to be caught by the hook 451, and the lock plate 452 is pushed to the side of the hook 451, whereby the hook 456b of the operating lever 455 and the lock plate 452 are engaged with each other. By this operation, the opening portion of the hook 451 is shut up. Subsequently, joint surfaces of the front frame 22 and the rear frame 23 are opposed to each other, the nut 392 of the lock device shown in Figure 4 is made to be caught by the engaging portion 40, and the lock lever 38 is locked by turning to the direction along the rear frame 23.

Next, a modified example of the hinge 24 will be described. Figure 15 is a sectional plan view of a rear end portion of the front frame 22 according to the modified example of the hinge 24, and Figure 16 is a front view of the same. The same symbols as in Figures 13 and 14 denote the same or equivalent portions. In the figures, the pivot pin 242 fixed on the side of the rear frame 23 is engaged with the hook 451, and the lock plate 457 is provided at a position for shutting up the opening portion (notch portion) of the hook 451 so that the pivot pin 242 cannot escape. The lock plate 457 comprises an operating portion 457a by which a finger can be caught and a lock portion 457b for shutting up the notch portion, and is turnably shaft-supported on the end block 45 by use of a pin 453. A spring (torsion coil spring) 458 is engaged with the lock plate 457 so as to exert a force in the direction of bringing the operating portion 457a toward the end block 45, namely, in the direction of spacing the lock portion 457b away from the end block 45. However, since the rear end of the lock portion 457b, namely, an end portion 452c on the side of the operating portion 457a makes contact with an end face of the end block 45, the lock plate 457 is not turned in the direction away from the end block 45 beyond a position where the lock portion 457b is opposed to the notch portion.

On the other hand, the end block 45 is provided with an escape portion (recessed portion) 459 so that the lock portion 457b can be turned in the direction (arrow RA) toward the end block 45. The escape portion 459 has a depth so set that the lock portion 457b escapes to the side of the end block 45 and the notch portion of the hook 451 is opened.

By this constitution, the lock plate 457 is energized by the spring 458 and the opening portion of the hook 451 is shut up by the lock portion 457b, so that the pivot pin 242 cannot escape from the hook 451. Therefore, when the lock device operated by the lock lever 38 is simply released, the vehicle body frame can only be folded up with the pivot pin 242 as a center.

In order to separate the front frame 22 and the rear frame 23 from each other after the vehicle body frame is folded up, a finger is fitted on the operating portion 457a of the lock plate 457 and is pulled in the direction away from the end block 45 (in the direction of arrow RR). By this operation, the lock portion 457b is retracted into the escape portion 459, and the opening portion of the hook 451 is opened. Therefore, the pivot pin 242 can escape from the hook 451, and the vehicle body frame can be completely separated at the connection portion between the front frame 22 and the rear frame 23.

In the case of re-assembling the separated vehicle body frame, the pivot pin 242 is pressed against the lock portion 457b, thereby retracting the lock portion 457b into the escape portion 459. When the pivot pin 242 has been contained in the hook 451, the pressing force on the pivot pin 242 against the lock portion 457b is released. As a result, the lock portion 457b is turned to the side opposite to the arrow RA by an energizing force of the spring 453, and the opening portion of the hook 451 is shut up.

In the embodiment of the hinge 24, the pivot pin 242 is provided on the side of the rear frame 23, whereas the hook 451 with which the pivot pin 242 is engaged and the lock device comprising the lock plates 452, 457, the operating lever 455 and the like are provided on the side of the front frame 22. However, this arrangement can be reversed, namely, the pivot pin 242 may be provided on the side of the front frame 22, and the lock plate 452 and the like may be provided on the side of the rear frame 23.

Next, the joint 6 for connecting the handle post 7 to the front fork 5 will be described in detail. Figure 17 is a sectional plan view of the joint 6, and Figure 18 is a perspective view of a major part. A joint block 62 provided at a top portion of the front fork 5 is provided with a hole 62a through which a shaft 63 of a knob 61 can penetrate horizontally, and a hole 62b orthogonal to the hole 62a. The holes 62a, 62b are provided with notch grooves 62c, 62d so that the shaft 63 can turn in a horizontal plane in the joint block 62.

A male screw 63a provided at the tip end of the shaft 63 is mated with a female screw 7a provided at the lower end of the handle post 7. A hub 7b to be fitted to an end face of the joint block 62 and a projected portion 7c to be engaged with a recessed portion 62e formed at an end face of the joint block 62 to thereby determine the direction with respect to the joint block 62 are provided at the lower end of the handle post 7. The hub 7b of the handle post 7 is fitted to the periphery of a terminal end portion of the notch groove 62c, and a projection portion 62f having a vertical groove for engagement with the projected portion 7c is provided. A stopper 55 turnably supported by a pin 64 is provided at an end portion of the joint block 62 on the rear side of the vehicle body.

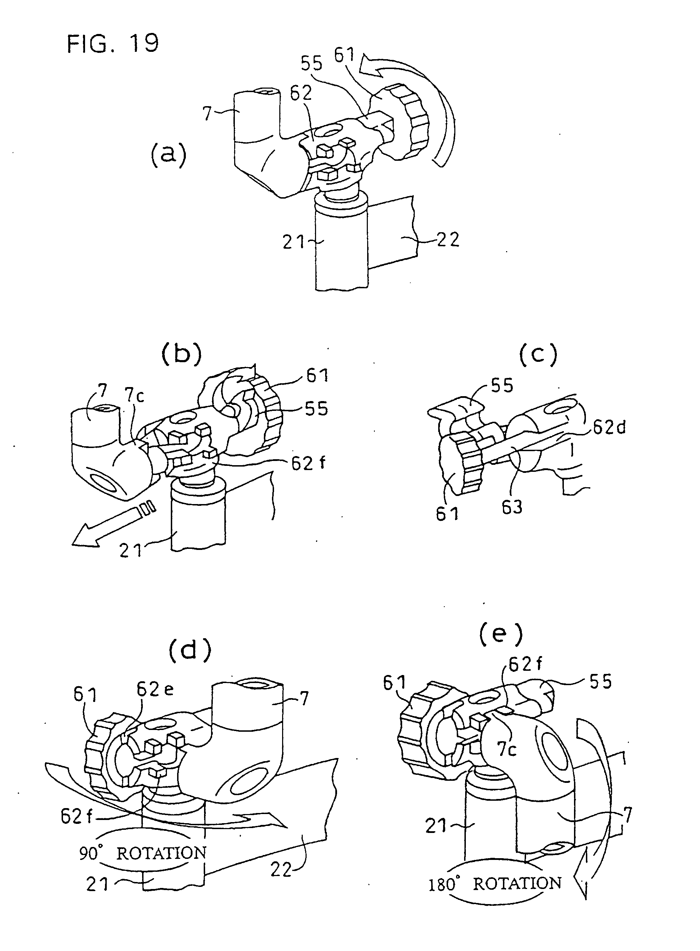

An operation of folding up the handle post 7 will be described. Figure 19 shows perspective views of the joint 6 for illustrating the procedures of folding. Figure 19(a) shows the joint 6 at the time of using the electric motor assisted bicycle. In this condition, the handle post 7 is raised vertically upwards, and the lower end of the handle post 7 is fitted to the joint block 62. In order to fold up the handle post 7, first, the knob 61 is turned to loosen the fastening.

Subsequently, as shown in Figure 19(b), the stopper 55 is opened upwards with the pin 64 as a center, and the knob 61 is energized to the front side of the vehicle body. By opening the stopper 55, as shown in the figure as viewed from the side of the knob 61 in Figure 19(c), a large space is generated between the knob 61 and the joint block 62, and the knob 61 can be displaced to the front side of the vehicle body. With the knob 61 displaced to the front side of the vehicle body, the projected portion 7c of the handle post 7 is disengaged from the recessed portion 62e of the joint block 62 (See Figure 19(b)). As a result, the shaft 63 can be turned counterclockwise in plan view (leftward direction as viewed along the running direction of the vehicle body). Figure 19(d) is a view showing the condition where the shaft 63 is turned by 90°.

Subsequently, as shown in Figure 19(e), the handle post 7 is tilted vertically downwards, whereby the projected portion 7c is made to accord to the vertical groove of the projection portion 62f. Finally, the knob 61 is turned to screw the shaft 63 into the handle post 7, thereby fastening.

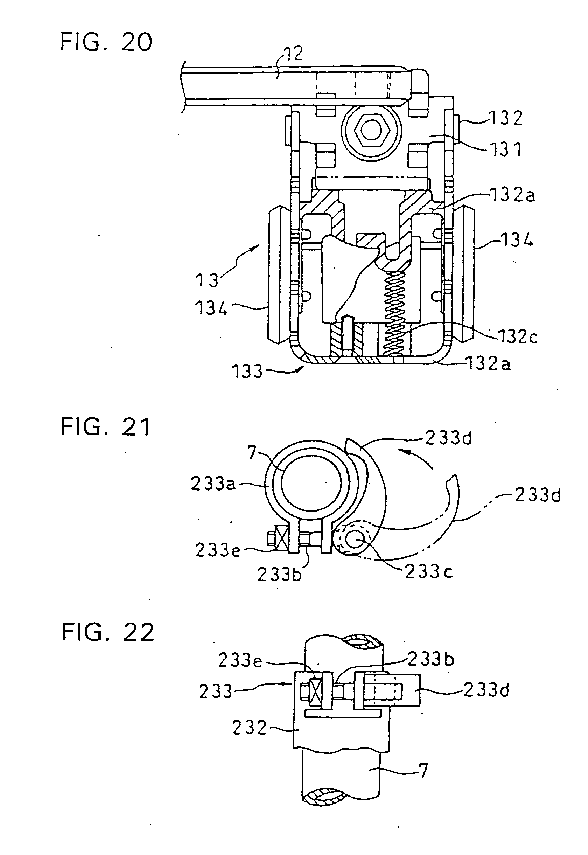

Figure 20 is a plan view of a pedal. The pedals 13 used in the condition of horizontally extending in left-right direction of the vehicle body can be folded up so as to come along the cranks 12 when not used. The pedal 13 comprises a fixed side 131 turnably fitted to the crank 12, and a movable side 133 connected to the fixed side 131 by a pivot pin 132. The movable side 133 has a U-shaped frame 132a supported by the pivot pin 131, and the frame 132a is provided with a stopper 132b slidably. The stopper 132b is energized by a compression coil spring 132c and pressed against a side surface of the fixed side 131. An operating portion 134 provided so as to penetrate through the frame 132a from the outside is connected to the stopper 132b.

In folding up the pedal 13, the operating portion 134 is displaced to the outside of the vehicle body against the spring 132c. By this operation, abutting force between the fixed side 131 and the stopper 132b is reduced, so that the frame 132a can be turned with the pivot pin 131 as a center, and the pedal 13 can be folded up to become along the crank 12.

Figure 21 is a plan view of a clamper 233 for fixing the seat post 3 to the rear frame 23, and Figure 22 is a front view. In the two figures, the clamp 233 is provided as a part of and at an upper portion of the boss 232 provided at the connection portion 231 of the rear frame 23. The clamp 233 comprises a ring 233a of which a portion of circumference is cut out, a bolt 233b provided at the cutout portion of the ring 233a, and a clamper lever 233d pivotally supported at the head of the bolt 233b by a pin 233c. A nut 233e conforming to the bolt 233b is welded to the ring 233a.

The clamper lever 233d constitutes an eccentric cam in relation to the pin 233c, and the force of fastening the ring 233a by the clamper lever 233d varies according to the turning angle of the clamper lever 233d in a plane orthogonal to the seat post 3. The eccentricity is so set that the fastening force is small when the clamper lever 233d is in the position indicated by the two-dotted chain line and the fastening force is increased as the clamper lever 233d is turned in the direction of the arrow from this position. With such a setting, fastening and fixing of the seat post 3 and releasing of the fastening can be carried out by turning operations of the clamper lever 233d. Incidentally, the amount of screwing-in of the bolt 233b into the nut 233e can be preliminarily adjusted so that the seat post 3 can be suitably fastened by the turning of the clamper lever 233d.

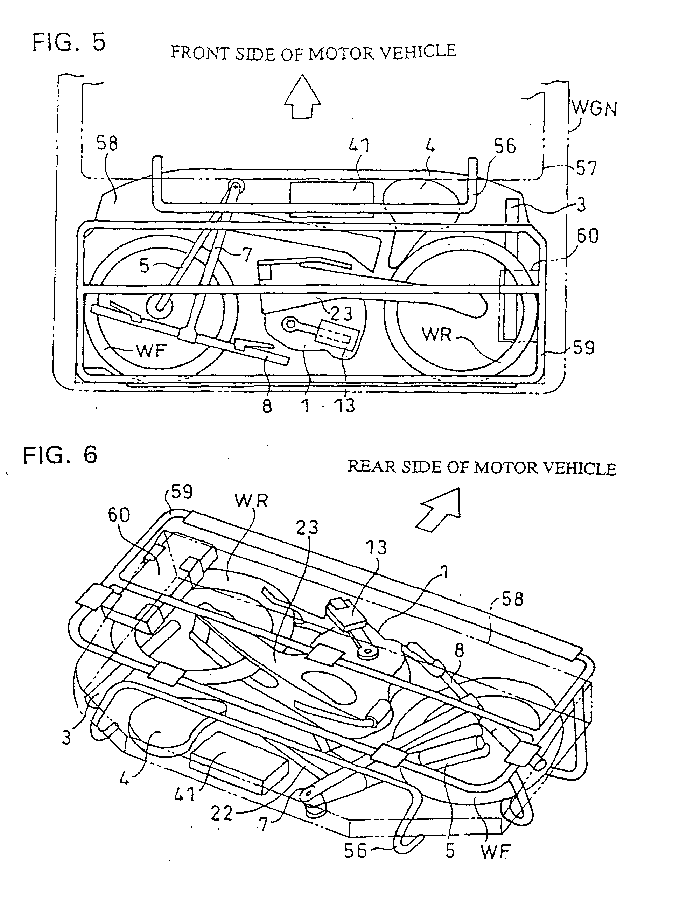

Figure 5 is a plan view showing a tray provided to be drawable into and out of a rear portion of a four-wheel motor vehicle (here, a wagon type car or an RV car is presumed) together with an electric motor assisted bicycle contained in the tray, and Figure 6 is a perspective view of the same as viewed from the front side of the motor vehicle. In the figures, a front frame 56 is fixed on the lower side of a rear seat 57 in the motor vehicle WGN, and determines the limit of the front position of the tray 58 in the motor vehicle WGN. An upper frame 59 is fixed in the motor vehicle WGN on the rear side of the front frame 56, and supports a shelf plate (not shown) thereon. The tray 58 preferably formed from a resin material is disposed in the space surrounded by the front frame 56 and the upper frame 59 so that it can be slid in the front-rear direction by being guided by rails not shown. A battery charger 60 for the battery 41 is held by the upper frame 59 on the left side thereof.

Procedures for mounting the electric motor assisted bicycle onto the motor vehicle for transport will be described referring to Figures 5 and 6. The tray 58 is preliminarily drawn out to the rear side of the motor vehicle so that the electric motor bicycle can be easily mounted. Then, first, the battery 41 is taken out of the electric motor bicycle by opening the lid 162 of the battery box 16, and is contained in a front central portion of the tray 58. Next, the seat post 3 is drawn out of the rear frame 23 by loosening the clamper 233, and, further, the seat post 3 and the seat 4 are separated from each other. The seat 4 is contained on the right side of the battery 41, and the seat post 3 is contained in a right end portion of the tray 58.

Subsequently, the vehicle body frame is separated. Prior to the separation, the handle post 7 is folded up from the joint 6 by operating the knob 61 of the joint 6. Then, the lock at the connection portion between the front frame 22 and the rear frame 23 is released by operating the lock lever 38, and the vehicle body frame is folded up with the pivot pin 242 as a center. Then, the pivot pin 242 is made to escape from the hook 451 of the front frame 22 by pushing the operating lever 455 (example of Figure 13) or pulling the lock plate 457 (example of Figure 15), and the vehicle body frame is separated. The front frame 22, the handle post 7, the handle 8, the front fork 5 and the front wheel WF are collectively contained on the left side in the tray 58. On the other hand, the rear frame 23, the electric motor assist unit 1 and the rear wheel WR are collectively contained on the right side in the tray 58, after folding up the pedals 13.

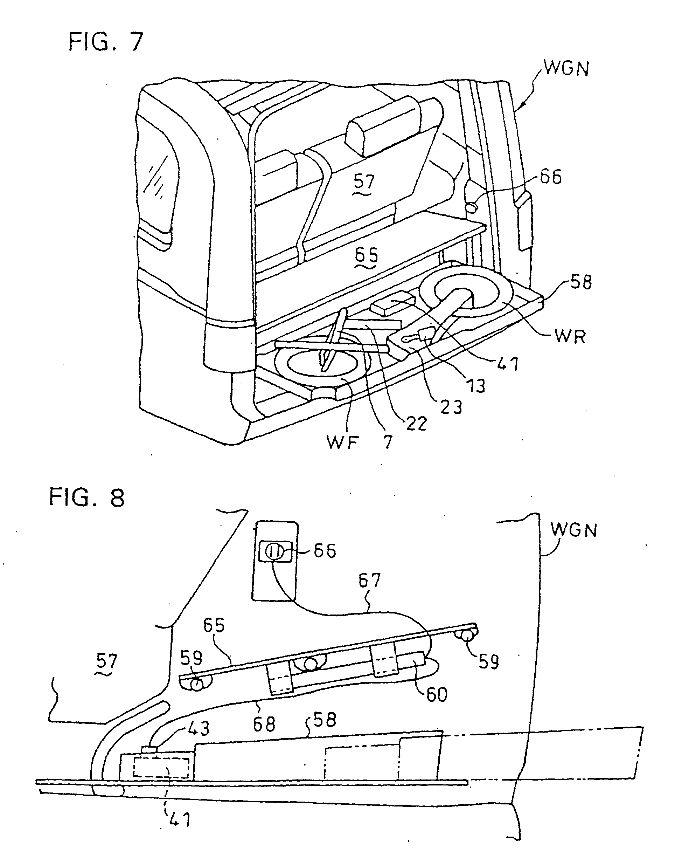

Figure 7 is a perspective view of a rear portion of the motor vehicle WGN, and Figure 8 is a sectional view of a major part of the same. As shown in Figure 7, in the condition where the tray 58 is drawn out, most of the electric motor assisted bicycle has escaped to the rear side of the motor vehicle from the area totally covered with the shelf plate 65, so that the user can easily load and unload the electric motor assisted bicycle from the motor vehicle without being hampered by the shelf plate 65.

Besides, an AC 100 volt plug socket 66 is provided at an inside side wall of the motor vehicle WGN. As shown in Figure 8, source power is supplied from the plug socket 66 to the battery charger 60 fitted to the back side of the shelf plate 65 through a cord 67, and, further, DC power at a predetermined voltage rectified by the battery charger 60 is supplied to the battery 41 through a cord 68. The cord 68 and the battery 41 are connected to each other through a connector 43.

Thus, by utilizing the AC plug socket 66, the time required for reaching the destination, for example, a resort or the like can be utilized effectively for charging the battery 41 by an electric generator driven by the engine of the motor vehicle WGN.

As is clear from the above description, according to claims 1 to 4, the electric motor assisted bicycle can be mounted on a motor vehicle after being disassembled, so that it is easy to load and unload the bicycle. Therefore, the electric motor assisted bicycle can be utilized by transporting it to a resort and the like. In addition, according to claim 2, the electric motor assisted bicycle can be disassembled while maintaining the power transmission mechanism ranging from the assist system to the rear wheel in the condition for use, so that disassembly and assembly are easy.

According to claim 3, the size in the width direction of the electric motor assisted bicycle can be reduced, so that the height of the bicycle laid down on the tray can be reduced. In addition, according to claim 4, the size of the tray in the width direction can be reduced, so that the electric motor assisted bicycle can be easily contained in the tray even where, for example, the tray is set to be drawn in and out in the front-rear direction of the motor vehicle and it is impossible to take a large size in the width direction of the motor vehicle. Therefore, according to claims 3 and 4, the electric motor assisted bicycle can be easily loaded onto a small type motor vehicle such as a private wagon car.

In summary it is an object to make it possible to disassemble an electric motor assisted bicycle and mount it on a motor vehicle.

To achieve this, a tray 58 drawable in and out is provided at a rear portion of a four-wheel motor vehicle, and an electric motor assisted bicycle is contained in the tray 58 in a disassembled state. In disassembly, a vehicle body frame is separated into a front frame 22 and a rear frame 23, and an assist system constituted of an electric motor assist unit and a battery is concentratedly laid out on the side of the rear frame 22. A handle can be folded up to be along a side surface of a front wheel WF, and pedals 13 can be folded up to be along a side surface of the rear frame 23. When contained in the tray 58 in a laid-down state, the bisected frames partly lap over each other, and, at the lapping portion, the front frame 22 and the rear frame 23 are staggered from each other in the drawing direction of the tray 58.

## Claims

1. An arrangement for transporting an electric motor assisted bicyde in a four-wheel motor vehicle (WGN), said arrangement comprising the electric motor assisted bicycle and the four-wheel motor vehicle, said electric motor assisted bicycle has a construction such that an electric motor assist unit (1) comprising a human force driving system for transmitting a tread force exerted on pedals (13) and a motor driving system (1) for adding auxiliary power to said human force driving system according to said tread force is supported by a vehicle body frame (2), a steering handle (8) and a front wheel (WF) are supported by one end of said vehicle body frame (2), and a rear wheel (WR) is supported by the other end, **characterized in that** said four-wheel motor vehicle (WGN) comprises, in its rear portion, a tray (58) which is roughly horizontally drawable into and out of said four-wheel motor vehicle (WGN), and said electric motor assisted bicycle can be disassembled so as to be containable in said tray (58).

2. An arrangement as claimed in claim 1, wherein said vehicle body frame (2) can be bisected into a front frame (22) side and a rear frame (23) side, and an assist system comprising said electric motor assist unit (1) and a battery box (16) is concentratedly arranged on the rear frame (23) side.

3. An arrangement as claimed in claim 1 or 2, wherein the steering handle (8) can be folded to be along a side surface of said front wheel (WF), and said pedals (13) can be folded to be along side surfaces of said rear frame (23).

4. An arrangement as claimed in claim 2 or 3, wherein when contained in a laid-down condition in said tray (58), said bisected front frame (22) and rear frame (23) partly lap over each other, said front frame and rear frame (23) at the lapping portion are staggered from each other in the drawing direction of said tray (58), and a saddle (4) and a seat post (3) can be disassembled so as to be laid out separately from said rear frame (23).

## Patentansprüche

1. Anordnung zum Transport eines Elektromotor-unterstützten Fahrrads in einem Vierradkraftfahrzeug (WGN), wobei die Anordnung das Elektromotor-unterstützte Fahrrad und das Vierradkraftfahrzeug umfasst, wobei das Elektromotor-unterstützte Fahrrad eine derartige Konstruktion besitzt, dass eine Elektromotor-Unterstützungseinheit (1), welche ein Muskelkraftantriebssystem umfasst, um eine auf Pedale (13) ausgeübte Tretkraft zu übertragen, und ein Motorantriebssystem (1) umfasst, um dem Muskelkraftantriebssystem gemäß der Tretkraft eine Hilfskraft hinzuzufügen, von einem Fahrzeugrumpfrahmen (2) getragen ist, ein Lenker (8) und ein Vorderrad (WF) von einem Ende des Fahrzeugrumpfrahmens (2) getragen sind und ein Hinterrad (WR) von dem anderen Ende getragen ist, **dadurch gekennzeichnet, dass** das Vierradkraftfahrzeug (WGN) in seinem hinteren Abschnitt eine Lade (58) umfasst, welche annähernd horizontal in das Vierradkraftfahrzeug (WGN) einziehbar und aus diesem ausziehbar ist, und wobei das Elektromotor-unterstützte Fahrrad auseinandergebaut werden kann, sodass es in der Lade (58) aufnehmbar ist.

2. Anordnung nach Anspruch 1, wobei der Fahrzeugrumpfrahmen (2) in eine vordere Rahmen (22)-Seite und eine hintere Rahmen (23)-Seite zweigeteilt werden kann, und ein Unterstützungssystem, welches die Elektromotor-Unterstützungseinheit (1) und einen Batteriekasten (16) umfasst, vereint auf der Seite des hinteren Rahmens (23) angeordnet ist.

3. Anordnung nach Anspruch 1 oder 2, wobei der Lenker (8) entlang einer Seitenfläche des Vorderrads (WF) geklappt werden kann und die Pedale (13) entlang einer Seitenfläche des hinteren Rahmens (23) geklappt werden können.

4. Anordnung nach Anspruch 2 oder 3, wobei dann, wenn sie in einem abgelegten Zustand in der Lade (58) enthalten sind, der zweigeteilte vordere Rahmen (22) und der hintere Rahmen (23) einander teilweise überlappen, wobei der vordere Rahmen und der hintere Rahmen (23) an dem überlappenden Abschnitt voneinander in der Ziehrichtung der Lade (58) versetzt sind, und ein Sattel (4) und eine Sattelstütze (3) auseinandergebaut werden können, sodass sie getrennt von dem hinteren Rahmen (23) ausgelegt sind.

## Revendications

1. Dispositif destiné à transporter une bicyclette avec moteur électrique auxiliaire dans un véhicule motorisé à quatre roues (WGN), ledit dispositif comprenant la bicyclette avec moteur électrique auxiliaire et le véhicule motorisé à quatre roues, ladite bicyclette avec moteur électrique auxiliaire étant de construction telle qu'une unité de moteur électrique auxiliaire (1) comprenant un système d'entraînement par force humaine, pour transmettre une force de roulement exercée sur les pédales (13), et un système d'entraînement par moteur (1), destiné à apporter une puissance secondaire audit système d'entraînement par force humaine selon ladite force de roulement, est supporté par un cadre du véhicule (2), un guidon (8) et une roue avant (WF) sont supportés par une extrémité dudit cadre du véhicule (2) et une roue arrière (WR) est supportée par l'autre extrémité, **caractérisé en ce que** ledit véhicule motorisé à quatre roues (WGN) comprend, dans sa partie arrière, un plateau (58) qui peut être introduit dans ou retiré dudit véhicule motorisé à quatre roues (WGN) de manière essentiellement horizontale et **en ce que** ladite bicyclette avec moteur électrique auxiliaire peut être désassemblée de manière à pouvoir être contenue dans ledit plateau (58).

2. Dispositif selon la revendication 1, dans lequel ledit cadre de véhicule (2) peut être séparé en un côté de cadre avant (22) et un côté de cadre arrière (23), et un système d'assistance comprenant ladite unité de moteur électrique auxiliaire (1) et un boîtier de batterie (16) qui est disposé de manière regroupée sur le côté de cadre arrière (23).

3. Dispositif selon la revendication 1 ou 2, dans lequel le guidon (8) peut être replié de manière à se trouver le long d'une surface de côté de ladite roue avant (WF) et lesdites pédales (13) peuvent être repliées de manière à se trouver le long des surfaces de côté dudit cadre arrière (23).

4. Dispositif selon la revendication 1 ou 2, dans lequel, lorsqu'ils sont contenus dans une position repliée dans ledit plateau (58), lesdits cadre avant (22) et cadre arrière (23) séparés en deux se chevauchent partiellement, lesdits cadre avant et cadre arrière (23), au niveau de la partie chevauchante, sont espacés l'un de l'autre dans le sens d'introduction dudit plateau (58) et une selle (4) et un tube de selle (3) peuvent être désassemblés de manière à être repliés séparément dudit cadre arrière (23).
